# EUROPÄISCHE PATENTANMELDUNG

(11) **EP 4 678 520 A1**
(43) Veröffentlichungstag der Anmeldung: **14.01.2026**
(21) Anmeldenummer: 24188158.0
(22) Anmeldetag: 11.07.2024
(51) Int. Cl.: B62D 55/28

(54) **AUFSATZTRAKTIONSVERSTÄRKUNG FÜR RAUPEN-, KETTEN- UND GUMMIKETTEN-FAHRZEUGE**

(71) Anmelder: Camenisch, Dario, 7130 Ilanz (CH)
(72) Erfinder: Camenisch, Dario, 7130 Ilanz (CH)
(74) Vertreter: Swisspat Riederer Hasler Patentanwälte AG

(57) **Zusammenfassung**

Die Erfindung betrifft eine Aufsatztraktionsverstärkung (1) für Antriebe von Raupenfahrzeugen, welche zusätzlich an und auf der Raupe (2), insbesondere Raupenkette oder Gummi-Raupenkette, des Raupenfahrzeugs aufsetzbar ist, wobei eine Mehrzahl an Halterungen (3) und zwischen diesen Halterungen (3) zur Bodenkontakt-Verbesserung vorgesehene Traktionskörper (4) vorhanden sind, wobei die Halterung (3) ein auf der Oberseite (5) der Raupe (2) zur Klemmung vorgesehenes oberes Klemmglied (6) und eine auf der Unterseite (7) der Raupe (2) zur Klemmung vorgesehene unteres Klemmglied (8) aufweist, wobei der Traktionskörper (4) durch eine zwischen den Halterungen (3) auf der Raupe (2) verlaufende Kette (9), Seile oder Stangen, insbesondere durch eine Vierkantkette (10) ausgebildet ist, wobei der Traktionskörper (4) zwischen an der Raupe (2) nicht gegenüber liegend angebrachten Halterungen (3) und damit zick-zack-förmig rundum die Raupe (2) verlaufend gespannt ist.

## Beschreibung

Die Erfindung betrifft eine Aufsatztraktionsverstärkung für Raupen-, Ketten- und Gummiketten-Fahrzeuge, wodurch die Traktion erhöht wird.

In Regionen mit extremen Wetterbedingungen wie starkem Schneefall oder vereisten oder schlammigen/rutschigen Strassen wird die Notwendigkeit von Zusatzhilfen für Ketten- und Gummiketten-Fahrzeuge, also insbesondere Baufahrzeuge wie Bagger und Minibagger oft unterschätzt. Doch gerade in solchen Situationen können diese Maschinen unverzichtbare Helfer sein. Steile oder vereiste und/oder rutschige Strassen stellen nicht nur eine Herausforderung für herkömmliche Fahrzeuge dar, sondern auch für insbesondere schwere Baumaschinen.

Der Einsatz von Schneeketten oder Zusatzketten erhöht die Traktion und verbessert die Stabilität der Maschinen auf rutschigem Untergrund erheblich. Dies ist besonders wichtig, um Unfälle zu vermeiden und die Sicherheit von Arbeitern und Passanten zu gewährleisten. Ein Ketten- und Gummiketten-Fahrzeug, der ohne angemessene Traktion auf einer eisigen Strasse operiert, könnte leicht ausser Kontrolle geraten und zu schweren Schäden führen.

Des Weiteren ermöglichen Schneeketten den Ketten- und Gummiketten-Fahrzeugen oder Baufahrzeugen, ihre Aufgaben effizienter auszuführen, selbst unter extremen Wetterbedingungen. Sie gewährleisten eine bessere Beweglichkeit und ermöglichen es den Maschinen, auch in schwer zugänglichen Gebieten zu arbeiten, wo eine ordnungsgemässe Traktion entscheidend ist. Dadurch wird die Effizienz der Bauprojekte gesteigert und die Ausfallzeiten aufgrund widriger Witterungsverhältnisse minimiert.

Insgesamt ist die Installation von Schneeketten auf Ketten- und Gummiketten-Fahrzeugen, also insbesondere Baggern und Minibaggern eine Investition in die Sicherheit und Effizienz von Bauprojekten, insbesondere in Gegenden mit extremen Winterverhältnissen. Durch die Gewährleistung einer besseren Traktion und Stabilität tragen Schneeketten dazu bei, Unfälle zu verhindern und den reibungslosen Ablauf von Bauarbeiten selbst unter den widrigsten Bedingungen zu gewährleisten.

Im Sinne der Erfindung sind Schneeketten auch für sehr rutschige und insbesondere verschlammte Wege gemeint und geeignet.

Aufgabe der Erfindung ist es eine verbesserte Traktion von Raupenfahrzeugen auf dem Untergrund für die Raupen der Raupenfahrzeuge zur Verfügung zu stellen.

Diese Aufgabe wird durch eine Aufsatztraktionsverstärkung nach den Merkmalen des Anspruchs 1 gelöst.

Erfindungsgemäss ist eine Aufsatztraktionsverstärkung für Antriebe von Raupenfahrzeugen vorgeschlagen, welche zusätzlich an und auf der Raupe, insbesondere Raupenkette oder Gummi-Raupenkette, des Raupenfahrzeugs aufsetzbar ist, mit einer Mehrzahl an Halterungen und zwischen diesen Halterungen zur Bodenkontakt-Verbesserung vorgesehene Traktionskörper vorhanden sind, wobei die Halterung ein auf der Oberseite der Raupe zur Klemmung vorgesehenes oberes Klemmglied und eine auf der Unterseite der Raupe zur Klemmung vorgesehene unteres Klemmglied aufweist, wobei der Traktionskörper durch eine zwischen den Halterungen auf der Raupe verlaufende Ketten, Seile oder Stangen, insbesondere durch eine Vierkantkette ausgebildet ist, wobei der Traktionskörper zwischen an der Raupe nicht gegenüber liegend angebrachten Halterungen und damit zick-zack-förmig rundum die Raupe verlaufend gespannt ist.

Hierdurch ist auf besonders effektive Weise die Erhöhung der Traktion ermöglicht, da der insbesondere als Kette ausgebildete Traktionskörper zu einem Stück, rundum der Raupe zick-zack-förmig verlaufend, verbunden und montiert wird und somit die Festigkeit inhärent gegeben ist.

Bevorzugter Weise ist vorgesehen, dass sich die Klemmglieder an einer Stütz-Seite jeweils an einem Ende eines Stegs abstützen, wobei die Klemmglieder zur Klemmung auf die Ober- bzw. Unterseite der Raupe mit einer gegenüber dem Steg verschwenkbaren Klemm-Seite aufeinander zu geschwenkt werden können, wobei ein Zug-Glied vorgesehen ist, welches zwischen den Klemmgliedern wirkt und diese wenigsten bei einem Klemmglied durch eine Verschwenk-Bewegung aufeinander zu zwingt und in seiner wirksamen Länge zwischen den Klemmgliedern verkürzbar und verlängerbar ausgestaltet ist, wobei das Zug-Glied zwischen den Klemmgliedern an deren dem Steg zugeordneten Enden vorgesehen ist.

Von Vorteil ist das Zug-Glied eine Schraube, insbesondere eine Schlossschraube, die durch eine Aussparung in den Klemmgliedern geführt ist, wobei der Kopf der Schraube an oberen Klemmglied durch die Aussparung geführt ist und in Formschluss gelagert ist und das freie Ende der Schraube durch die Aussparung im unteren Klemmglied geführt ist und mittels einer Mutter gehalten ist.

Vorteilhafterweise klemmt diese Mutter eine Kugelscheibe die Aussparung zur Durchführung des freien Endes der Schraube, welche vorzugsweise durch ein Langloch oder elliptisch geformtes Loch ausgebildet.

Das Zusammenspiel zwischen Langloch oder elliptisch geformtem Loch, der Kugelscheibe und dem Zug-Glied begünstigt das Verschwenken des unteren Klemmgliedes zum oberen Klemmglied, da die Kugel unter Zugkraft im Langloch oder elliptisch geformtem Loch als Gelenkpunkt dient.

Von Vorteil ist der Steg in der Länge entsprechend der Dicke der zu klemmenden Raupe gewählt ist.

Ebenso von Vorteil ist nach einer Ausgestaltung der Erfindung vorgesehen, dass am oberen Klemmglied wenigstens eine Öse an- oder ausgeformt ist, an welcher der Traktionskörper befestigt werden kann.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Teil-Darstellung in zwei Ansichten einer erfindungsgemässen Aufsatztraktionsverstärkung auf einer Raupe mit Halterungen befestigt,
- Fig. 2: eine schematische Teil-Darstellung der Aufsatztraktionsverstärkung mit deren Einzelteilen,
- Fig. 3: eine vergrösserte schematische Teil-Darstellung der Aufsatztraktionsverstärkung mit deren Einzelteilen aus Fig. 2,
- Fig. 4: eine schematische Schnitt-Darstellung der Aufsatztraktionsverstärkung in ihren Einzelteilen,
- Fig. 5: eine schematische Darstellung der Halterung in ihren Einzelteilen von vorne gesehen,
- Fig. 6: eine schematische Darstellung der Halterung in ihren Einzelteilen von der Seite her gesehen,
- Fig. 7: eine schematische Darstellung der zusammengesetzten Halterung von oben gesehen,
- Fig. 8: eine schematische Darstellung der zusammengesetzten Halterung aus Fig. 7 von oben gesehen, ohne Schraube,
- Fig. 9: eine schematische Darstellung der zusammengesetzten Halterung aus Fig. 7 von schräg unten gesehen,
- Fig. 10: eine schematische Darstellung der zusammengesetzten Halterung aus Fig. 7 von schräg oben gesehen,
- Fig. 11: eine schematische Darstellung der zusammengesetzten Halterung aus Fig. 7 von schräg unten gesehen, und
- Fig. 12: eine schematische Darstellung der zusammengesetzten Halterung aus Fig. 7 von der Seite her gesehen.

Die in den Figuren gleichen Bezugsziffern bezeichnen gleiche oder gleich wirkende Elemente.

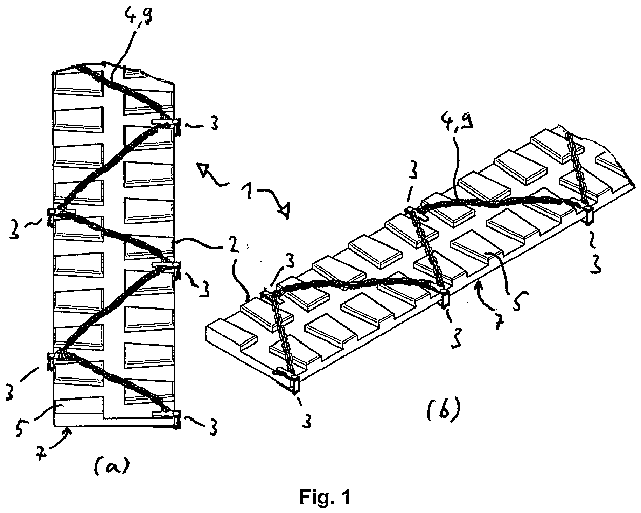

In Fig. 1 ist eine Aufsatztraktionsverstärkung auf einer Raupe mit Halterungen befestigt in zwei Ansichten (a) und (b) dargestellt.

Die Aufsatztraktionsverstärkung ist auf einer Raupe 2, gezeigt ist eine Gummi-Raupenkette eines Raupenfahrzeugs montiert bzw. aufsetzt ist.

Es ist eine Mehrzahl an Halterungen 3 versetzt zueinander angeordnet und zwischen diesen Halterungen 3 zur Bodenkontakt-Verbesserung ein durchgehender Traktionskörper 4 geführt.

Der Traktionskörper 4 ist im gezeigten Beispiel durch eine zwischen den Halterungen 3 auf der Raupe 2 verlaufende Kette 9 ausgebildet. Wobei der Traktionskörper 4 bzw. die Kette 9 zwischen den an der Raupe 2 nicht gegenüber liegend angebrachten Halterungen 3 und damit zick-zack-förmig rundum die Raupe 2 auf der Oberseite 5 der Raupe 2 verlaufend gespannt ist.

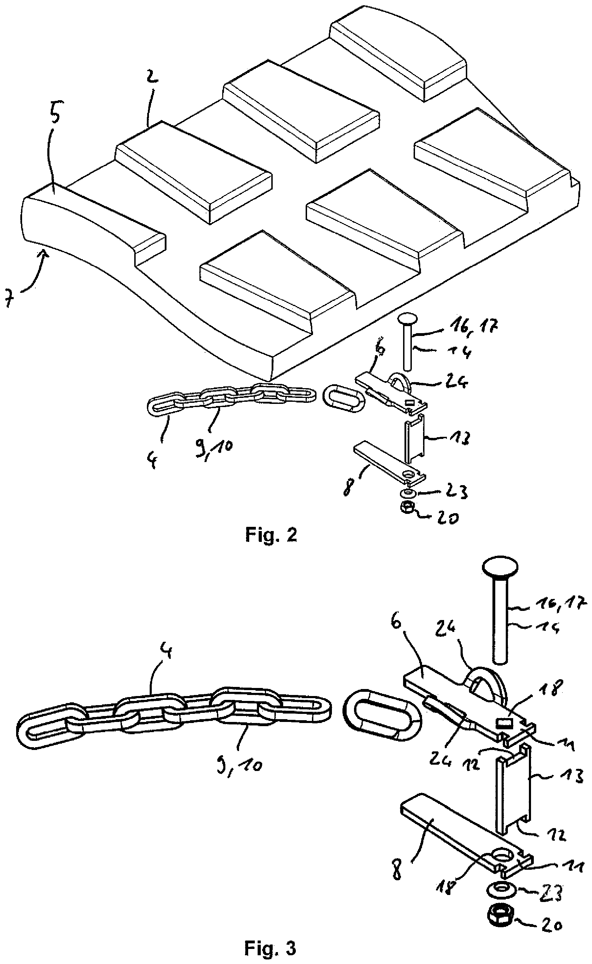

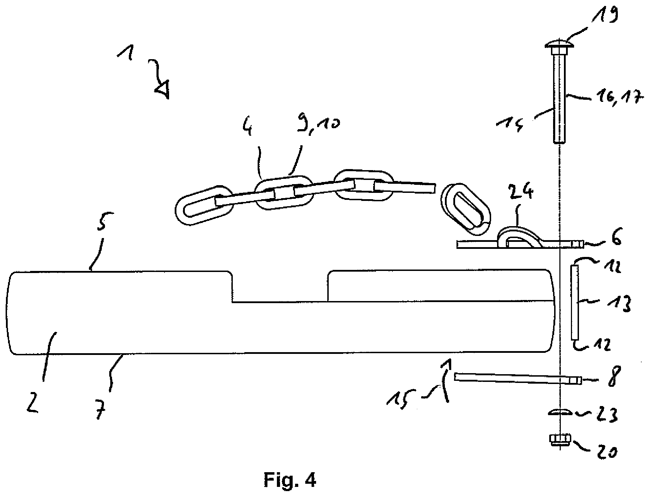

In Fig. 2, in Fig. 3 vergrössert, und in Fig. 4 von der Seite ist eine schematische Teil-Darstellung der Aufsatztraktionsverstärkung mit deren Einzelteilen gezeigt.

Hier ist auch erkennbar, im gezeigten Beispiel als Kette 9 eine Vierkantkette 10 gewählt ist.

Die Halterung 3 weist ein auf der Oberseite 5 der Raupe 2 zur Klemmung vorgesehenes oberes Klemmglied 6 und ein auf der Unterseite 7 der Raupe 2 zur Klemmung vorgesehenes unteres Klemmglied 8 auf.

Die Klemmglieder 9 stützen sich an einer Stütz-Seite 11 jeweils an einem Ende 12 eines Stegs 13 ab, wobei die Klemmglieder 6 und zur Klemmung auf die Ober- bzw. Unterseite 7 der Raupe 2 mit einer gegenüber dem Steg 13 verschwenkbaren Klemm-Seite aufeinander zu geschwenkt werden können. Der Steg 13 in der Länge entsprechend der Dicke der zu klemmenden Raupe 2 gewählt. Damit dieser nicht verrutscht sind im gezeigten Beispiel an den Enden 12 des Stegs 13 Stecknasen 21 vorgesehen, die in Stecknasen-Ausnehmungen 22 an den Klemmgliedern 6 bzw. 8 eingreifen.

Die Schwenkung erfolgt durch ein Verkürzen eines Zug-Gliedes 14 in Form der Schraube 16, die im Beispiel als Schlossschraube 17 ausgebildet ist, die zwischen den Klemmgliedern 9 wirkt und diese wenigstens bei einem Klemmglied 9 durch eine Verschwenk-Bewegung 15 aufeinander zu zwingt und in seiner wirksamen Länge zwischen den Klemmgliedern 9 verkürzbar und verlängerbar ausgestaltet ist.

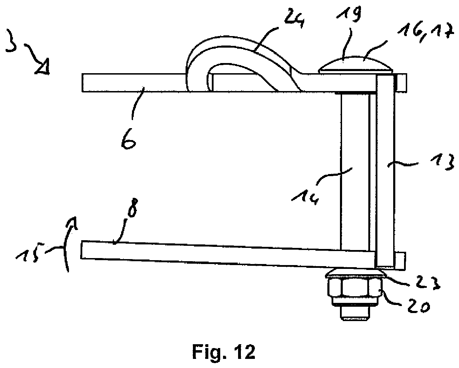

Das Zug-Glied 14 bzw. die Schraube 16 ist zwischen den Klemmgliedern 9 an deren dem Steg 13 zugeordneten Enden vorgesehen, so zwingt sie beim Anziehen eine mit der Schraube 16 hinter dem unteren Klemmglied 8 dieses zur Verschwenk-Bewegung 15 (Pfeil), siehe auch Fig. 4 und 12.

Am oberen Klemmglied 6 sind Ösen 24 ausgeformt, an welchen der Traktionskörper 4 bzw. die Kette 9 befestigt wird. Es können spezielle Verbindungsglieder vorgesehen sein, die mit den Ösen 24 und der Kette 9 verbunden werden. So entsteht eine durchgehende Kette in zick-zack-Form.

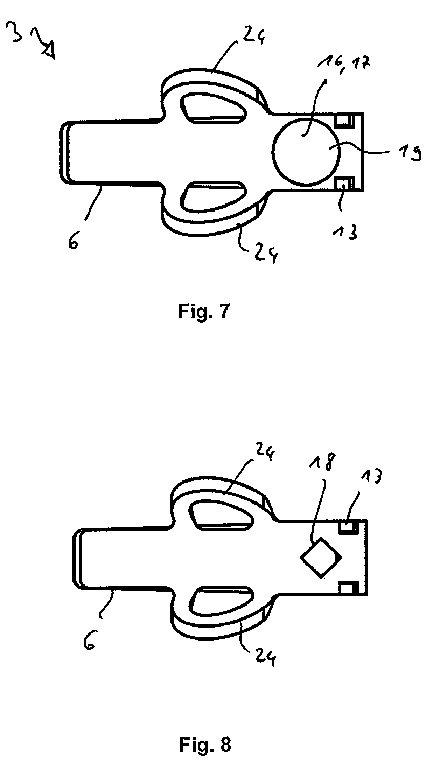

In Fig. 3 und Fig. 8 ist gut erkennbar, dass die Aussparung 18 im oberen Klemmglied 6 entsprechend der Wahl der Schraube 16 als Schlossschraube 17 als Viereck-Lochausnehmung ausgestaltet ist. Dadurch ist der Kopf 19 der Schlossschraube 17 am oberen Klemmglied 6 durch die Aussparung 18 in Formschluss gelagert. Das freie Ende der Schlossschraube 17 ist durch die Aussparung 18 des unteren Klemmglieds 8 geführt und mittels einer Mutter 20 gehalten.

Damit das tatsächliche Verschwenken des unteren Klemmgliedes 8 sichergestellt ist, ist im Beispiel zwischen Mutter 20 und der Aussparung 18 zur Durchführung des freien Endes der Schraube 16 eine Kugelscheibe 23 vorgesehen. Alternative könnte eine Kugelmutter zum Einsatz kommen, welche die Funktionen der Mutter 20 und Kugelscheibe 23 kombiniert.

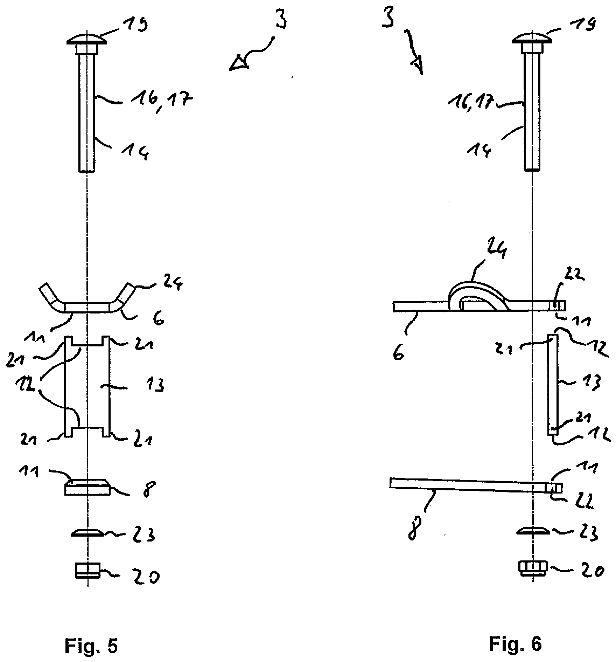

Die Fig. 5 und 6 zeigen noch einmal die Halterung 3 mit allen Teilen im zerlegten Zustand von vorne und von der Seite.

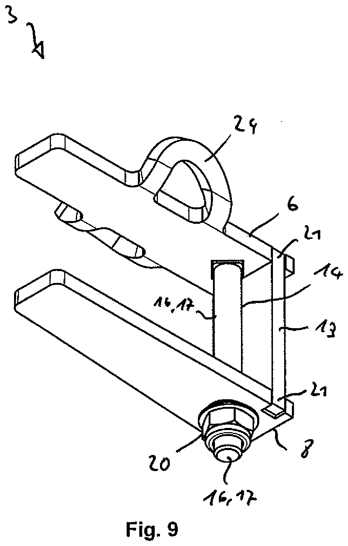

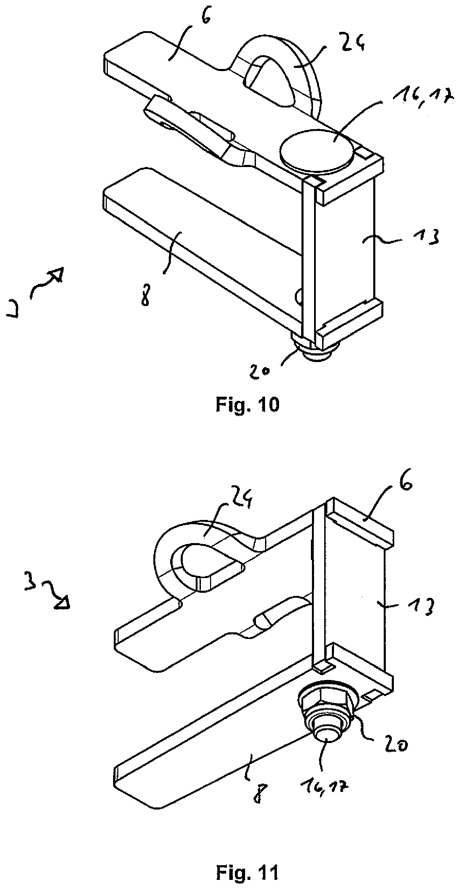

Die Fig. 7 und 9 bis 12 zeigen die Halterung 3 im zusammengesetzten Zustand von verschiedenen Blickrichtungen.

### Bezugszeichenliste

- 1: Aufsatztraktionsverstärkung
- 2: Raupe
- 3: Halterung
- 4: Traktionskörper
- 5: Oberseite
- 6: oberes Klemmglied
- 7: Unterseite
- 8: unteres Klemmglied
- 9: Kette
- 10: Vierkantkette
- 11: Stütz-Seite
- 12: Ende
- 13: Steg
- 14: Zug-Glied
- 15: Verschwenk-Bewegung
- 16: Schraube
- 17: Schlossschraube
- 18: Aussparung
- 19: Kopf
- 20: Mutter
- 21: Stecknasen
- 22: Stecknasen-Ausnehmungen
- 23: Kugelscheibe
- 24: Öse

## Patentansprüche

1. Aufsatztraktionsverstärkung (1) für Antriebe von Raupenfahrzeugen,
welche zusätzlich an und auf der Raupe (2), insbesondere Raupenkette oder Gummi-Raupenkette, des Raupenfahrzeugs aufsetzbar ist,
**dadurch gekennzeichnet,**
**dass** eine Mehrzahl an Halterungen (3) und zwischen diesen Halterungen (3) zur Bodenkontakt-Verbesserung vorgesehene Traktionskörper (4) vorhanden sind,
wobei die Halterung (3) ein auf der Oberseite (5) der Raupe (2) zur Klemmung vorgesehenes oberes Klemmglied (6) und ein auf der Unterseite (7) der Raupe (2) zur Klemmung vorgesehenes unteres Klemmglied (8) aufweist,
wobei der Traktionskörper (4) durch eine zwischen den Halterungen (3) auf der Raupe (2) verlaufende Kette (9), Seile oder Stangen, insbesondere durch eine Vierkantkette (10) ausgebildet ist,
wobei der Traktionskörper (4) zwischen an der Raupe (2) nicht gegenüber liegend angebrachten Halterungen (3) und damit zick-zack-förmig rundum die Raupe (2) verlaufend gespannt ist.

2. Aufsatztraktionsverstärkung (1) nach Anspruch 1,
**dadurch gekennzeichnet,**
**dass** sich die Klemmglieder (6,8) an einer Stütz-Seite (11) jeweils an einem Ende (12) eines Stegs (13) abstützen,
wobei die Klemmglieder (6,8) zur Klemmung auf die Ober- bzw. Unterseite (7) der Raupe (2) mit einer gegenüber dem Steg (13) verschwenkbaren Klemm-Seite aufeinander zu geschwenkt werden können,
wobei ein Zug-Glied (14) vorgesehen ist, welches zwischen den Klemmgliedern (6,8) wirkt und diese wenigstens bei einem Klemmglied (6,8) durch eine Verschwenk-Bewegung (15) aufeinander zu zwingt und in seiner wirksamen Länge zwischen den Klemmgliedern (6,8) verkürzbar und verlängerbar ausgestaltet ist,
wobei das Zug-Glied (14) zwischen den Klemmgliedern (6,8) an deren dem Steg (13) zugeordneten Enden vorgesehen ist.

3. Aufsatztraktionsverstärkung (1) nach Anspruch 2,
**dadurch gekennzeichnet,**
**dass** das Zug-Glied (14) eine Schraube (16) ist, insbesondere eine Schlossschraube (17), die durch eine Aussparung (18) in den Klemmgliedern (9) geführt ist,
wobei der Kopf (19) der Schraube (16) am oberen Klemmglied (6) durch die Aussparung (18) geführt ist und in Formschluss gelagert ist und das freie Ende der Schraube (16,17) durch die Aussparung (18) im unteren Klemmglied (8) geführt ist und mittels einer Mutter (20) gehalten ist.

4. Aufsatztraktionsverstärkung (1) nach Anspruch 3,
**dadurch gekennzeichnet,**
**dass** die Aussparung (18) zur Durchführung des freien Endes der Schraube (16) durch ein Langloch oder elliptisch geformtes Loch ausgebildet ist.

5. Aufsatztraktionsverstärkung (1) nach Anspruch 3 oder 4,
**dadurch gekennzeichnet,**
**dass** zwischen Mutter (20) und der Aussparung (18) zur Durchführung des freien Endes der Schraube (16) eine Kugelscheibe (23) vorgesehen ist.

6. Aufsatztraktionsverstärkung (1) nach einem der vorhergehenden Ansprüche,
**dadurch gekennzeichnet,**
**dass** der Steg (13) in der Länge entsprechend der Dicke der zu klemmenden Raupe (2) gewählt ist.

7. Aufsatztraktionsverstärkung (1) nach einem der vorhergehenden Ansprüche,
**dadurch gekennzeichnet,**
**dass** am oberen Klemmglied (6) wenigstens eine Öse (24) an- oder ausgeformt ist, an welcher der Traktionskörper (4) befestigt werden kann.
